# EUROPÄISCHE PATENTANMELDUNG

(11) **EP 2 000 822 A1**
(43) Veröffentlichungstag der Anmeldung: **10.12.2008**
(21) Anmeldenummer: 08103851.5
(22) Anmeldetag: 07.05.2008
(51) Int. Cl.: G01S 7/52, G01S 7/40

(54) **Verfahren zur Funktionsprüfung eines Abstandsmesssystems**

(30) Priorität: 08.06.2007 DE 102007026688
(71) Anmelder: ROBERT BOSCH GMBH, 70442 Stuttgart (DE)
(72) Erfinder: Schmid, Roland, 70599 Stuttgart (DE)

(57) **Zusammenfassung**

Die Erfindung betrifft ein Verfahren zur Funktionsprüfung eines Abstandsmesssystems zur Erfassung von Hindernissen in der Nähe eines Fahrzeugs, insbesondere Kraftfahrzeugs, mit mindestens einem eine Reflektion eines ausgesendeten Signals empfangenden Sensor. Es ist vorgesehen, dass die Empfindlichkeit des Sensors zur Erfassung von Boden-Reflektionen zeitweise erhöht wird und die erfassten Boden-Reflektionen miteinander verglichen werden.

## Beschreibung

Die Erfindung betrifft ein Verfahren zur Funktionsüberprüfung eines Abstandsmesssystems zur Erfassung von Hindernissen in der Nähe eines Fahrzeugs, insbesondere Kraftfahrzeugs, mit mindestens einem eine Reflektion eines ausgesendeten Signals empfangenden Sensor.

### Stand der Technik

Verfahren der eingangs genannten Art sind bekannt. Berührungslos arbeitende Abstandsmesssysteme werden vorwiegend als Einpark-Hilfe eingesetzt. Dabei werden einer oder mehrere Sensoren im Heck- und/oder Front- und/oder Seitenbereich eines Fahrzeugs angeordnet. Ein Steuergerät steuert den Sensor oder die Sensoren an und wertet die erfassten Reflektionen eines gesendeten Signals aus.

Aus dem Stand der Technik sind unterschiedliche Verfahren zur Funktionsprüfung derartiger Abstandsmesssysteme bekannt. So geht aus der DE 10 2005 009 702 A1 ein Verfahren hervor, bei dem die erfassten Werte eines Sensors mit denen eines zweiten Abstandsmesssystems, das auf einem physikalisch anderem System basiert, verglichen werden. Sollte ein Messsystem durch äußere Umstände beeinträchtigt sein, so trifft diese Beeinträchtigung nicht das andere Messsystem, sodass der Vergleich eine zuverlässige Aussage über die Funktion des ersten Abstandsmesssystems gibt.

Aus der Druckschrift US 5,235,315 geht ein Verfahren hervor, bei dem die Funktionsfähigkeit eines Abstandsmesssystems während einer Startphase geprüft wird. Dabei wird die Empfindlichkeit eines Sensors auf einen ersten Level gehoben, sodass Boden-Reflektionen erfasst werden können. Wird eine Boden-Reflektion erfasst, wird das Abstandsmesssystem aktiviert, wobei die Empfindlichkeit des Sensors auf einen zweiten Level gesenkt wird, um die bei der Abstandsmessung störenden Boden-Reflektionen auszublenden.

Darüber hinaus sind Verfahren bekannt, bei denen empfangene Reflektionen eines Sensors mit denen eines Nachbarsensors verglichen beziehungsweise plausibilisiert werden, um die Funktionsfähigkeit der Sensoren zu prüfen. Nachteilig bei den oben stehend genannten Verfahren ist, dass zwar die Funktionsfähigkeit einzelner Sensoren oder unter hohem Aufwand, mittels eines zweiten Abstandsmesssystems, das erste Abstandsmesssystem geprüft werden kann, jedoch keine Aussage über eine schleichende Erblindung beziehungsweise Verschlechterung der Gesamtleistung des Abstandsmesssystems, beispielsweise aufgrund von auf den Sensoren befindlichem Schneematsch, Schlamm und/oder Steinschlag, getroffen werden kann, sodass ein derartiges Abstandsmesssystem nicht für sicherheitskritische Funktionen einsetzbar ist.

### Offenbarung der Erfindung

Die Erfindung sieht vor, dass die Empfindlichkeit des Sensors zur Erfassung von Boden-Reflektionen zeitweise erhöht wird und die erfassten Boden-Reflektionen miteinander verglichen werden. Es werden somit Boden-Reflektionen erfasst und miteinander verglichen. Dadurch lässt sich eine Aussage über das Verhalten des gesamten Abstandsmesssystems treffen, da beispielsweise eine Erblindung des Sensors aufgrund von auf den Sensor gespritzten Schlamm erkannt wird. Dies ist auf einfache Art und Weise aus einer Veränderung der Stärke der empfangenen Boden-Reflektionen zu entnehmen. Nimmt die Stärke des Signals beziehungsweise der Boden-Reflektionen plötzlich oder stetig ab, so wird eine Erblindung des Sensors diagnostiziert und vorteilhafterweise ein Warnsignal, akustisch und/oder visuell, ausgegeben.

Vorteilhafterweise wird die Empfindlichkeit des Sensors wiederholt erhöht. Durch das wiederholte Erhöhen der Empfindlichkeit des Sensors kann zwischenzeitlich das Abstandsmesssystem im Normal-Betrieb, also zur Erfassung von Hindernissen, betrieben werden. Zur Einstellung der Empfindlichkeit wird bevorzugt eine Verstärkungs-Kennlinie des Sensors umgeschaltet, sodass die vom Sensor erfassten Boden-Reflektionen anstatt unterdrückt zu werden bevorzugt erfasst werden.

Besonders bevorzugt werden die Boden-Reflektionen unterschiedlicher Zeiträume miteinander verglichen. Es werden in unterschiedlichen Zeiträumen Boden-Reflektionen von dem Sensor empfangen, die miteinander verglichen werden. Dadurch wird es möglich über größere Zeiträume hinweg eine (schleichende) Erblindung des Sensors zu erfassen, ohne dass die Boden-Reflektionen über den gesamten Zeitraum erfasst werden müssen. Während des vorteilhaften Prüfmodus, also während die Empfindlichkeit des Sensors erhöht ist, wird das Abstandsmesssystem zweckmäßigerweise derart betrieben, dass die Blindheitserkennung beziehungsweise Funktionsprüfung gegenüber dem Erfassen von Hindernissen in der Nähe des Fahrzeugs Vorrang hat, sodass im Prüfmodus das Erkennen von Hindernissen eine untergeordnete Bedeutung hat. Dadurch kann das Abstandsmesssystem im Prüfmodus optimal für die Blindheitserkennung und im "Normal"-Modus optimal für die Abstandsmessung betrieben werden.

Nach einer vorteilhaften Weiterbildung der Erfindung wird bei deaktiviertem Abstandsmesssystem die Empfindlichkeit des Sensors regelmäßig erhöht. Im normalen Fahrbetrieb des Fahrzeugs, also wenn das Abstandsmesssystem nicht benötigt wird, werden somit Boden-Reflektionen (sofern sie vorhanden sind) regelmäßig erfasst. Dabei reicht es aus, die Empfindlichkeit des Sensors regelmäßig für eine kurze Zeit zu erhöhen. Die erfassten Boden-Reflektionen des jeweiligen Zeitraums werden gespeichert und anschließend miteinander verglichen, sodass eine Aussage über die Funktionsfähigkeit des Abstandsmesssystems beziehungsweise über die Erblindung des Sensors getroffen werden kann. Die Funktionsprüfung des Abstandsmesssystems wird also außerhalb des Abstandsmessbetriebs durchgeführt, sodass dieser nicht beeinflusst wird.

Bevorzugt wird die Empfindlichkeit des Sensors im Entfernungsbereich der maximalen Boden-Reflektion erhöht. Hierdurch wird gewährleistet, dass eine Boden-Reflektion auch bei ungünstigen Umgebungsbedingungen, wie beispielsweise bei "glatten" Straßenbelägen und hohen Geschwindigkeiten des Fahrzeugs, empfangen werden. Die Wirksamkeit der Funktionsprüfung wird dadurch bezüglich der Blindheitserkennung stark erhöht.

Nach einer Weiterbildung der Erfindung wird als Sensor ein Ultraschall-Sensor verwendet. Vorteilhafterweise werden die von ihm erfassten Werte beziehungsweise Boden-Reflektionen in komprimierter Form über einen längeren Zeitraum hinweg, zum Beispiel in einem Flash-Speicher, gespeichert. Damit sind sowohl plötzlich eintretende als auch schleichende Verschlechterungen/Erblindungen detektierbar.

Mit Vorteil ist vorgesehen, dass die Empfindlichkeit im Betrieb des Abstandsmesssystems regelmäßig zur Erfassung von Boden-Reflektionen erhöht wird. Dies ist insbesondere dann von Bedeutung, wenn das Abstandsmesssystem für längere Zeit ununterbrochen genutzt wird, wie zum Beispiel bei niedrigen Geschwindigkeiten, im Stau-Verkehr und/oder wenn das Abstandsmesssystem als Blind Spot Detection (Überwachung des toten Winkels) eingesetzt wird. Da die Empfindlichkeit des Sensors nur kurzzeitig erhöht wird, wird die eigentliche Abstandsmessung nur geringfügig beeinflusst.

Weiterhin ist vorgesehen, dass die Empfindlichkeit des Sensors direkt nach Starten und/oder Anhalten des Fahrzeugs zur Erfassung von der Boden-Reflektion erhöht wird. So können beispielsweise die Boden-Reflektionen, die nach dem Anhalten des Fahrzeugs erfasst wurden, mit denen beim folgenden Neustart erfassten Boden-Reflektionen verglichen werden, wobei auf einfache Art und Weise eine Erblindung des Sensors, wie zum Beispiel aufgrund von Schneefall, ermittelt wird. Durch das regelmäßige Erhöhen der Empfindlichkeit des Sensors während der Fahrt kann sowohl eine plötzlich eintretende Blindheit des Sensors, zum Beispiel durch Steinschlag, Schlamm, Eis oder Matsch erkannt werden, als auch eine schleichende Verschlechterung der Leistung des gesamten Abstandsmesssystems.

Vorteilhafterweise wird die Empfindlichkeit des Sensors direkt vor Aktivierung und/oder Deaktivierung des Abstandsmesssystems erhöht. So wird die Funktion des Abstandsmesssystems direkt vor der Nutzung geprüft, wobei bei einer erkannten/erfassten Fehlfunktion beispielsweise ein akustisches und/oder visuelles Warnsignal an den Fahrer ausgegeben wird. Dadurch wird der Fahrer direkt vor beispielsweise einem Einparken auf die Funktionsfähigkeit des Abstandsmesssystems aufmerksam gemacht.

Nach einer Weiterbildung der Erfindung sendet der Sensor das Signal aus. Derartige Sensoren, die ein Signal aussenden und dessen Reflektionen empfangen, insbesondere derartige Ultraschall-Sensoren, sind bekannt, sodass an dieser Stelle nicht näher auf den Sensor als solchen eingegangen werden soll.

Besonders vorteilhaft erfasst der Sensor mindestens eine Boden-Reflektion eines von mindestens einem benachbarten Sensor ausgesendeten Signals. Es ist also vorgesehen, dass das Abstandsmesssystem mehrere Sensoren verwendet, die ein Signal aussenden und Signal-Reflektionen empfangen. Wobei insbesondere jeder Sensor mindestens eine Boden-Reflektion eines oder zweier benachbarter Sensoren erfasst und auswertet. Durch Erfassen von Boden-Reflektionen des von dem Sensor selbst ausgesendeten Signals, dem sogenannten Eigenecho, und durch den Vergleich dieses mit Boden-Reflektionen eines von einem benachbarten Sensors ausgesendeten Signals, können die empfangenden Werte miteinander verglichen und somit das Ergebnis plausibilisiert werden. In dem Prüfmodus werden vorteilhafterweise nacheinander alle vorhandenen Sensoren des Abstandsmesssystems als Signal-Sender verwendet.

Insgesamt wird durch das vorteilhafte Verfahren eine Überwachung des gesamten Abstandsmesssystems möglich gemacht, die sowohl auf eine Fehlfunktion einzelner Sensoren sowie auf eine plötzliche oder schleichende Erblindung beziehungsweise einen Leistungsabfall des gesamten Abstandsmesssystems schließen lässt.

### Kurze Beschreibung der Zeichnungen

Im Folgenden soll die Erfindung anhand eines Ausführungsbeispiels näher erläutert werden.

Dazu zeigen:
- Figur 1: ein Fahrzeug mit einem Abstandsmesssystem in einer Seitenansicht und
- Figur 2: das Fahrzeug in einer Draufsicht.

### Ausführungsform(en) der Erfindung

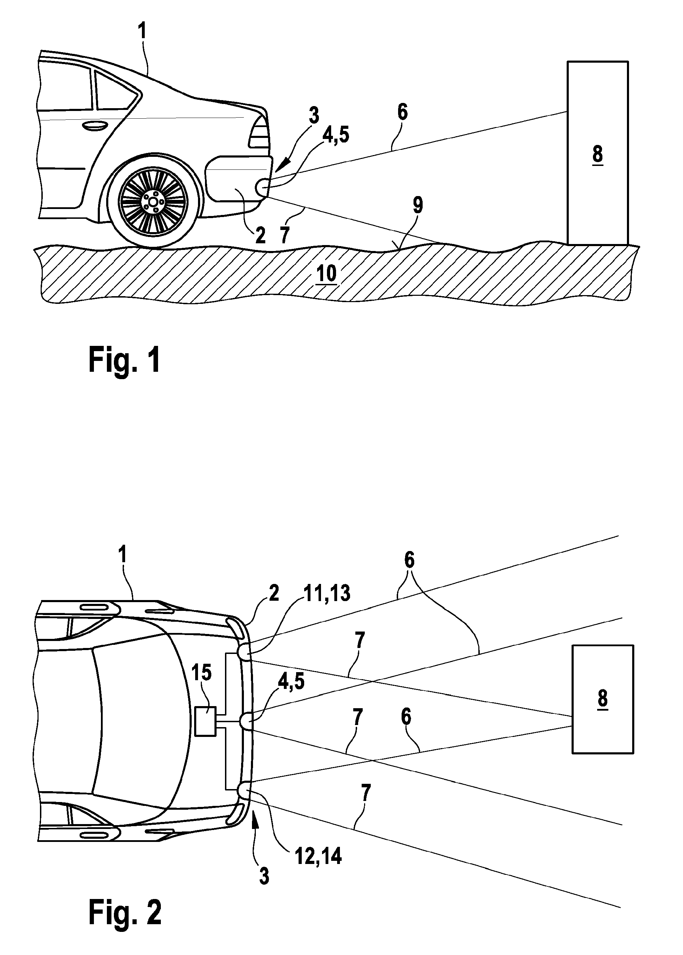

Die Figur 1 zeigt in einer schematischen Darstellung einen Teil eines Kraftfahrzeugs 1, welches an seiner Heckstoßstange 2 ein Abstandsmesssystem 3 zur Erfassung von Hindernissen in der Nähe des Kraftfahrzeugs 1 aufweist. Das Abstandsmesssystem 3 weist einen als Ultraschall-Sensor 4 ausgebildeten Sensor 5 auf, der sowohl ein Signal aussenden als auch empfangen kann. Der Sende-Bereich des Ultraschall-Sensors 4 ist hierbei beispielhaft durch zwei Linien 6 und 7 gekennzeichnet. Beabstandet von der Heckstoßstange 2 befindet sich ein Hindernis 8, welches auf einer unebenen, hier übertrieben uneben dargestellten, Bodenoberfläche 9 einer Fahrbahn 10, auf der sich ebenfalls das Kraftfahrzeug 1 befindet.

In dem vorliegenden Ausführungsbeispiel ist das Abstandsmesssystem 3 aktiviert, sodass der Ultraschall-Sensor 4 den Abstand zu dem Hindernis 8 erfasst. Grundsätzlich ist die Empfindlichkeit des Ultraschall-Sensors 4 derart eingestellt, dass empfangene Boden-Reflektionen, des von der Bodenoberfläche 9 reflektierten Signals unterdrückt werden, sodass diese nicht die Abstandsmessung zu dem Hindernis 8 stören.

Um die Funktion des Abstandsmesssystems 3 zu prüfen, wird die Empfindlichkeit des Sensors 5 beziehungsweise des Ultraschall-Sensors 4 zeitweise erhöht, sodass Boden-Reflektionen erfasst und miteinander verglichen werden. Der Vergleich der Boden-Reflektionen gibt dabei Aufschluss über die Gesamtleistungen des Abstandsmesssystems 3. Vorteilhafterweise wird die Empfindlichkeit des Sensors 5 bei Aktivierung des Abstandsmesssystems 3 erhöht, sodass bevor die Abstandsmessung zu dem Hindernis 8 erfolgt, das Abstandsmesssystem 3 auf Funktion geprüft wird. Werden keine Boden-Reflektionen von dem Sensor 5 erfasst, da beispielsweise dieser mit Schnee und/oder Schlamm bedeckt ist, so wird der Fahrer des Kraftfahrzeugs 1 beispielsweise mittels eines akustischen und/oder visuellen Signals darauf aufmerksam gemacht, dass das Abstandsmesssystem 3 nicht funktionsfähig ist.

Die Empfindlichkeit des Sensors 5 wird zusätzlich im normalen Fahrbetrieb des Kraftfahrzeugs 1 bei deaktiviertem Abstandsmesssystem 3 zur Erfassung von Bodenunebenheiten regelmäßig wiederholt erhöht, wobei die erfassten Boden-Reflektionen unterschiedlicher Zeiträume miteinander verglichen werden. Dadurch wird das Abstandsmesssystem 3 im deaktivierten Zustand auf seine Funktion geprüft. Eine regelmäßige Erhöhung der Empfindlichkeit des Sensors kann auch bei aktiviertem Abstandsmesssystem 3 erfolgen. Auch wenn dadurch das Abstandsmesssystem 3 nur geringfügig beeinflusst wird, ist es durch eine Funktionsprüfung während des normalen Fahrbetriebs möglich die Funktionsfähigkeit des Abstandsmesssystems 3 zu prüfen, ohne dass eine Abstandsmessung beeinflusst wird. Durch das Vergleichen von Boden-Reflektionen unterschiedlicher Zeiträume miteinander wird eine schleichende Verschlechterung der Gesamtleistung des Abstandsmesssystems beziehungsweise eine schleichende Erblindung erfasst, die beispielsweise durch auf den Sensor 5 gelangenden Matsch entstehen kann. Die Empfindlichkeit des Sensors wird dazu im Entfernungsbereich der maximalen Boden-Reflektion erhöht, um eine Aussage über die Funktionsfähigkeit des Abstandsmesssystems 3 auch bei schwachen Boden-Reflektionen, also zum Beispiel bei besonders glatter Fahrbahn 10, zu ermöglichen. Ist ein Abstandsmesssystem 3 über einen längeren Zeitraum hinweg aktiviert, wie zum Beispiel bei einem Betrieb des Kraftfahrzeugs 1 bei niedriger Geschwindigkeit im Stau, so wird die Empfindlichkeit des Sensors 5 in regelmäßigen Abständen auch während des Betriebs des Abstandsmesssystems 3 erhöht, um Boden-Reflektionen zu erfassen, die miteinander verglichen werden, um die Funktionsfähigkeit des Abstandsmesssystems 3 im Betrieb zu erfassen.

Die Figur 2 zeigt das Kraftfahrzeug 1 in einer Draufsicht, wobei das Abstandsmesssystem 3 zwei weitere als Ultraschall-Sensoren 11 und 12 ausgebildete Sensoren 13 und 14 aufweist, die links und rechts des Sensors 5 an der Heckstoßstange 2 angeordnet sind. Die Sensoren 5, 13, 14 werden von einem Steuergerät 15 des Kraftfahrzeugs 1 angesteuert, welches zugleich die empfangenen Werte der Sensoren 5, 13, 14 auswertet. Zur Funktionsprüfung des Abstandsmesssystems 3 wird jeder der Sensoren 5, 13 und 14 nacheinander als Sender verwendet, wobei der als Sender verwendete Sensor (beispielsweise 5) sowohl Boden-Reflektionen seines eigenen ausgesendeten Signals, das sogenannte Eigenecho, erfasst, wie auch die Boden-Reflektionen von ausgesendeten Signalen der übrigen Sensoren (13 und 14). Dadurch kann die mittels eines Sensors 5, 13, 14 gemachte Aussage über die Funktionsfähigkeit des Abstandsmesssystems 3 plausibilisiert werden. Darüber hinaus können so die einzelnen Sensoren 5, 13, 14 des Abstandsmesssystems 3 auf ihre Funktionsfähigkeit überprüft werden. Die erfassten Boden-Reflektionen der Sensoren 5, 13 und 14 werden vorteilhafterweise in einem Speicher des Steuergeräts 15 über einen längeren Zeitraum hinweg hinterlegt, sodass sowohl eine plötzliche wie auch eine schleichende Erblindung des Abstandsmesssystems 3 erfasst wird.

Insgesamt wird durch das beschriebene Verfahren auf einfache Art und Weise ermöglicht, die Funktion des Abstandsmesssystems 3 zu bestimmen. Insbesondere ist kein zusätzliches, aufwendiges zweites Zusatz-Abstandsmesssystem zur Funktionsprüfung nötig. Zusätzlich zu den oben genannten Möglichkeiten kann die Empfindlichkeit des Sensors auch nach dem Anhalten und/oder Deaktivieren des Abstandsmesssystems erhöht werden um Boden-Reflektionen zu erfassen, die gespeichert und bei einer Aktivierung beziehungsweise einem Starten des Fahrzeugs mit neu erfassten Boden-Reflektionen verglichen werden. Die Empfindlichkeit des Sensors 5, 13 und/oder 14 wird dabei nur kurzzeitig erhöht, insbesondere im "Normal"-Betrieb des Abstandsmesssystems 3, sodass dieser nur geringfügig beeinflusst wird. Die erfassten Daten der Sensoren 5, 13, 14 beziehungsweise die Boden-Reflektionen werden bevorzugt in komprimierter Form, zum Beispiel in einem Flash-Speicher des Steuergeräts 15, gespeichert.

## Patentansprüche

1. Verfahren zur Funktionsprüfung eines Abstandsmesssystems zur Erfassung von Hindernissen in der Nähe eines Fahrzeugs, insbesondere Kraftfahrzeugs, mit mindestens einem eine Reflektion eines ausgesendeten Signals empfangenden Sensor, **dadurch gekennzeichnet, dass** die Empfindlichkeit des Sensors zur Erfassung von Boden-Reflektionen zeitweise erhöht wird und die erfassten Boden-Reflektionen miteinander verglichen werden.

2. Verfahren nach Anspruch 1, **dadurch gekennzeichnet, dass** die Empfindlichkeit des Sensors wiederholt erhöht wird.

3. Verfahren nach einem der vorhergehenden Ansprüche, **dadurch gekennzeichnet, dass** die Boden-Reflektionen unterschiedlicher Zeiträume miteinander verglichen werden.

4. Verfahren nach einem der vorhergehenden Ansprüche, **dadurch gekennzeichnet, dass** bei deaktiviertem Abstandsmesssystem die Empfindlichkeit des Sensors regelmäßig erhöht wird.

5. Verfahren nach einem der vorhergehenden Ansprüche, **dadurch gekennzeichnet, dass** die Empfindlichkeit des Sensors im Entfernungsbereich der maximalen Boden-Reflektion erhöht wird.

6. Verfahren nach einem der vorhergehenden Ansprüche, **dadurch gekennzeichnet, dass** als Sensor ein Ultraschall-Sensor verwendet wird.

7. Verfahren nach einem der vorhergehenden Ansprüche, **dadurch gekennzeichnet, dass** die Empfindlichkeit regelmäßig im Betrieb des Abstandsmesssystems erhöht wird.

8. Verfahren nach einem der vorhergehenden Ansprüche, **dadurch gekennzeichnet, dass** die Empfindlichkeit des Sensors direkt nach Starten und/oder Anhalten des Fahrzeugs erhöht wird.

9. Verfahren nach einem der vorhergehenden Ansprüche, **dadurch gekennzeichnet, dass** die Empfindlichkeit des Sensors direkt vor Aktivierung und/oder Deaktivierung des Abstandsmesssystems erhöht wird.

10. Verfahren nach einem der vorhergehenden Ansprüche, **dadurch gekennzeichnet, dass** der Sensor das Signal aussendet.

11. Verfahren nach einem der vorhergehenden Ansprüche, **dadurch gekennzeichnet, dass** der Sensor mindestens eine Boden-Reflektion eines von mindestens einem benachbarten Sensor ausgesendeten Signals erfasst.

12. Verfahren nach einem der vorhergehenden Ansprüche, **dadurch gekennzeichnet, dass** erfasste Boden-Reflektionen benachbarter Sensoren miteinander verglichen werden.
